# EUROPÄISCHE PATENTSCHRIFT

(11) **EP 3 585 547 B1**
(45) Veröffentlichungstag und Bekanntmachung des Hinweises auf die Patenterteilung: **14.10.2026**
(21) Anmeldenummer: 18707009.9
(22) Anmeldetag: 21.02.2018
(51) Int. Cl.: B23B 51/10

(54) **KEGELSENKER**
CONICAL COUNTERSINK
FRAISE À CHANFREINER

(30) Priorität: 24.02.2017 DE 102017203021; 22.08.2017 DE 102017214622
(43) Veröffentlichungstag der Anmeldung: 01.01.2020
(73) Patentinhaber: Gühring KG, 72458 Albstadt (DE)
(72) Erfinder: SCHAIRER, Stefan, 72461 Albstadt (DE)
(74) Vertreter: Winter, Brandl - Partnerschaft mbB
(86) Internationale Anmeldenummer: PCT/EP2018/054239
(87) Internationale Veröffentlichungsnummer: WO 2018/153896

(56) Entgegenhaltungen:
- EP-A1- 1 481 648
- EP-A1- 2 915 613
- DE-A1- 102010 005 580
- JP-U- 3 111 276
- US-A- 1 267 704
- US-A- 4 032 251

## Beschreibung

Die Erfindung betrifft einen ein- oder mehrschneidigen Kegelsenker.

Die Struktur und Arbeitsweise eines Kegelsenkers sind dem Fachmann grundsätzlich z.B. aus der DIN 335:2007-12 bekannt. Kegelsenker haben regelmäßig einen Einspannschaft und einen vom Einspannschaft getragenenen Schneidkopf mit einer kegelförmigen Schneidspitze, in der eine oder mehrere Hauptschneiden auf einer virtuellen Kegelfläche mit der Drehachse des Kegelsenkers als Kegelachse liegen. Der Kegel- oder Spitzenwinkel des Schneidkopfs liegt üblicherweise bei 90° (z.B. für Senkkopfschrauben). Daneben sind Kegelsenker mit 60° Spitzenwinkel (zum Entgraten), 75° Spitzenwinkel (für Nietkopfsenkungen), 120° Spitzenwinkel (für Blechnietsenkungen) oder dergleichen bekannt.

Um eine hohe Laufruhe bei der Senkbearbeitung zu erreichen, können mehrere Hauptschneiden mit ungleicher Winkelteilung um die Drehachse herum angeordnet sein. So ist beispielsweise aus der WO 2015/075127 A1 ein dreischneidiger Kegelsenker bekannt, bei dem die Hauptschneiden in Drehrichtung des Kegelsenkers mit ungleicher Teilung angeordnet sind. Durch die definierte Ungleichteilung soll eine Reduzierung der Schwingungen und dadurch eine Verbesserung der Oberflächenqualität der Senkung erreicht werden. In der DE 10 2005 055 579 A1 wird ebenfalls ein dreischneidiger Kegelsenker vorgeschlagen, bei dem zur Verbesserung der Schnitt- und Laufeigenschaften eine in Drehrichtung an eine Hauptschneide anschließende Freifläche radial und axial hinterschliffen sein soll.

Den bekannten Kegelsenkern gemeinsam ist, dass jede der in einer virtuellen Kegelfläche liegenden Hauptschneiden von ihrem mittigen Schneideneck zu ihrem außenumfangsseitigen Schneideneck geradlinig verläuft.

Die Druckschriften US 4 032 251 A, DE 10 2010 005581 A1, US 1 267 704 A und EP 2 915 613 A1 zeigen Kegelsenker bzw. Schneidwerkzeuge mit bogenförmig verlaufenden Schneiden. Die Druckschrift JP 3 111276 U offenbart einen Kegelsenker gemäß dem Oberbegriff des Anspruchs 1.

Ausgehend von dem Kegelsenker der JP 3 111276 U liegt der Erfindung nun die Aufgabe zugrunde, einen ein- oder mehrschneidigen Kegelsenker zu schaffen, mit der eine hohe Laufruhe und Werkzeugstandzeit bei der Senkbearbeitung erhalten wird.

Diese Aufgabe wird durch einen Kegelsenker mit den Merkmalen des Anspruchs 1 gelöst. Vorteilhafte Weiterbildungen sind Gegenstand abhängiger Ansprüche.

Ein Kegelsenker kann analog der eingangs diskutierten bekannten Kegelsenker oder gemäß der DIN 335:2007-12 einen Einspannschaft und einen Schneidkopf aufweisen. Der Schneidkopf des erfindungsgemäßen Kegelsenkers kann ein- oder mehrschneidig ausgeführt sein. Jede Hauptschneide liegt in einer virtuellen Kegelfläche mit der Drehachse des Kegelsenkers als Kegelachse. Der Öffnungs- oder Kegelwinkel kann z.B. bei 60°, 75°, 90°, 120°, etc. liegen. Des Weiteren können der Schneidkopf und der Einspannschaft materialeinstückig, z.B. aus HSS-Stahl, gefertigt sein.

Ein erfindungsgemäßer Kegelsenker hat eine Drehrichtung nach rechts oder eine Drehrichtung nach links, einen Einspannschaft und einen an den Einspannschaft anschließenden Schneidkopf mit wenigstens einer Hauptschneide, die in einer axialen Stirnansicht gesehen spiralförmig entlang eines Bogens verläuft, der bei einer Drehrichtung nach rechts im Uhrzeigersinn und bei einer Drehrichtung nach links gegen den Uhrzeigersinn, von einem mittigen Schneideneck zu einem außenumfangsseitigen Schneideneck läuft. Die wenigstens eine Hauptschneide windet sich daher um die Drehachse oder, anders ausgedrückt, weist einen Drall um die Drehachse auf. Die wenigstens eine Hauptschneide hat einen Drall in Drehrichtung. Der Außendurchmesser des Schneidkopfs ist größer ist als der Außendurchmesser des Einspannschafts, und der Schneidkopf weist zumindest eine außenumfangsseitige Nebenschneide auf.

Aufgrund der Bogenform hat die wenigstens eine Hauptschneide eine größere Schneidenlänge als eine geradlinig verlaufende Hauptschneide. Die bei der Senkbearbeitung an der Hauptschneide wirkende Schnittkraft verteilt sich daher über eine größere Eingriffslänge, woraus eine höhere Stabilität, eine höhere Laufruhe bzw. eine geringere Ratterneigung und ein geringerer Schneidenverschleiß resultieren.

Die wenigstens eine Hauptschneide weist erfindungsgemäß einen Drall in Drehrichtung des Kegelsenkers auf. Durch einen Drall in Drehrichtung (Rechtsdrall bei Drehrichtung nach rechts bzw. Linksdrall bei Drehrichtung nach links) wird erreicht, dass die wenigstens eine Hauptschneide einen ziehenden Schnitt ausführt und auf das senkbearbeitete Werkstück schälend einwirkt. Verglichen mit einem drückenden Schnitt, der mit einer entgegen der Drehrichtung bogenförmig verlaufenden Hauptschneide bzw. bei einer geradlinig verlaufenden Hauptschneide erreicht werden würde, resultiert ein ziehender Schnitt in einer höheren Laufruhe.

Der in einer Seitenansicht bei radialer Blickrichtung an dem außenumfangsseitigen Schneideneck gegenüber der Drehachse gemessene Drallwinkel der wenigstens einen Hauptschneide kann in einem Bereich von 10° bis 70°, im Besonderen von 15° bis 55°, vorzugsweise von 25° bis 45°, liegen.

Des Weiteren kann der Durchmesser des Kegelsenkers im Bereich von 4,3 mm bis 31 mm liegen und die wenigstens eine Hauptschneide in einer Stirnansicht gesehen einen Radius im Bereich von 0,5 mm bis 150 mm, im Besonderen von 4 mm bis 40 mm, vorzugsweise von 7 mm bis 25 mm, haben.

Erste Testläufe mit in den oben genannten Bereichen liegenden Drallwinkeln und Bogenradien haben zu guten Ergebnissen hinsichtlich Laufruhe bei der Senkbearbeitung geführt.

Hat der Kegelsenker mehrere Hauptschneiden, genügt es grundsätzlich, wenn wenigstens eine der mehreren Hauptschneiden spiralförmig verläuft. Bereits dadurch lassen sich die oben erwähnten Vorteile erzielen.

Im Hinblick auf die Erzielung einer langen Standzeit sowie einer höheren Laufruhe hat der erfindungsgemäße Kegelsenker vorzugsweise mehrere, im Besonderen drei, Hauptschneiden, die alle spiralförmig verlaufend ausgebildet sind.

Die mehreren Hauptschneiden können gleiche oder ungleiche Bogenradien und/oder Drallwinkel aufweisen. Gleiche Bogenradien und/oder Drallwinkel tragen zu einer einfacheren Schleifbearbeitung des Schneidkopfs des Kegelsenkers bei. Durch ungleiche Bogenradien und/oder Drallwinkel lassen sich ungleiche Schneidenlängen mit der Folge ungleicher Schnittkräfte und damit verbunden ungleicher Beanspruchung der Hauptschneiden erreichen, was sich positiv auf die Laufruhe des Kegelsenkers auswirkt.

Unabhängig davon, ob die Bogenradien und/oder Drallwinkel gleich oder ungleich sind, sind die mehreren Hauptschneiden bevorzugt so um die Drehachse herum angeordnet sein, dass zumindest deren außenumfangsseitige Schneidenecken mit gleicher Winkelteilung angeordnet sind. Alternativ dazu können die außenumfangsseitigen Schneidenecken der Hauptschneiden mit ungleicher Winkelteilung angeordnet sein.

Die mehreren Hauptschneiden können darüber hinaus gleiche oder (definiert) ungleiche Schneidhöhen aufweisen. Bei gleichen Schneidhöhen liegen die Hauptschneiden auf einer gemeinsamen virtuellen Kegelfläche, was zu einer Vereinfachung der Schleifbearbeitung des Schneidkopfs des Kegelsenkers beiträgt. (Definiert) ungleiche Schneidhöhen können dagegen aufgrund ungleicher Beanspruchung der Hauptschneiden zu einer weiteren Verringerung der Ratterneigung und damit zu einer höheren Laufruhe des Kegelsenkers bei der Senkbearbeitung beitragen.

Der Kegelsenker kann neben der wenigstens einen spiralförmig verlaufenden Hauptschneide wenigstens eine, in herkömmlicher Weise ausgebildete, geradlinig verlaufende Schneide aufweisen. Wenn die außenumfangsseitigen Schneidenecken der spiralförmigen Hauptschneiden und der geradlinigen Schneiden gegenüber der Drehachse des Kegelsenkers auf gleichem Radius liegen, ergeben sich ungleiche Schneidenlängen mit der Folge ungleicher Schnittkräfte und damit verbunden ungleicher Beanspruchung der Hauptschneiden und Schneiden, was sich positiv auf die Laufruhe des Kegelsenkers auswirkt.

Wenn der Kegelsenker mehrere spiralförmig verlaufende Hauptschneiden und mehrere geradlinig verlaufende Schneiden, insbesondere eine gleich große Zahl spiralförmig verlaufender Hauptschneiden und geradlinig verlaufender Schneiden, aufweist, ist es vorteilhaft, wenn die spiralförmigen Hauptschneiden und die geradlinigen Schneiden abwechselnd um die Drehachse des Kegelsenkers angeordnet sind. Dabei können die außenumfangsseitigen Schneidenecken der spiralförmigen Hauptschneiden und der geradlinigen Schneiden mit gleicher Winkelteilung, d.h. symmetrisch, um die Drehachse des Kegelsenkers angeordnet sein. Dadurch wird der Kegelsenker um den Umfang symmetrisch bzw. gleichmäßig belastet.

Nachfolgend werden mit Hilfe der beiliegenden Zeichnungen zwei Ausführungsformen eines erfindungsgemäßen Kegelsenkers beschrieben.
Fig. 1 zeigt eine Perspektivansicht eines erfindungsgemäßen Kegelsenkers gemäß einer ersten Ausführungsform;
Fig. 2 zeigt eine Seitenansicht des erfindungsgemäßen Kegelsenkers gemäß der ersten Ausführungsform;
Fig. 3 zeigt eine weitere Seitenansicht des erfindungsgemäßen Kegelsenkers gemäß der ersten Ausführungsform;
Fig. 4 zeigt eine Stirnansicht des erfindungsgemäßen Kegelsenkers gemäß der ersten Ausführungsform;
Fig. 5 zeigt eine Teilschnittansicht des erfindungsgemäßen Kegelsenkers gemäß der ersten Ausführungsform entlang einer Linie M-M in Fig. 3;
Fig. 6 zeigt eine Stirnansicht des erfindungsgemäßen Kegelsenkers gemäß einer zweiten Ausführungsform;
Fig. 7 zeigt eine vereinfacht dargestellte Stirnansicht des erfindungsgemäßen Kegelsenkers gemäß der zweiten Ausführungsform zur Erläuterung der Bogenradien der Hauptschneiden; und
Fig. 8 zeigt eine Stirnansicht des erfindungsgemäßen Kegelsenkers gemäß einer dritten Ausführungsform.

### Erste Ausführungsform

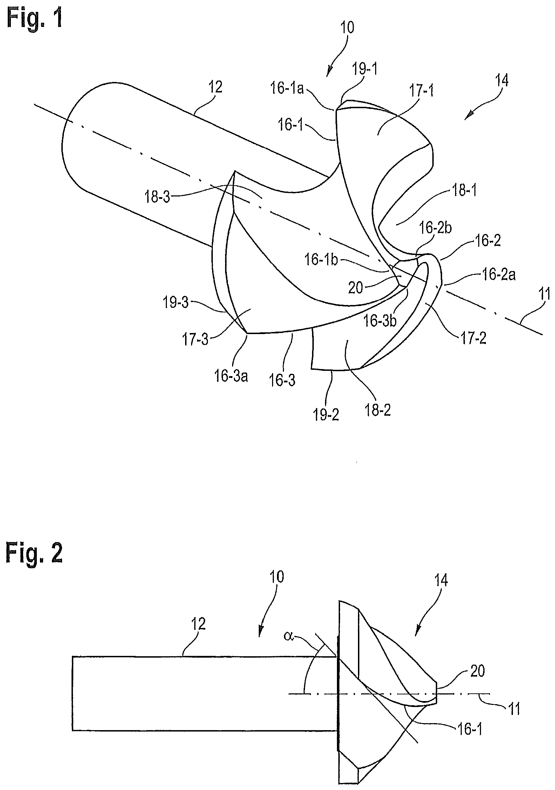

Die Fig. 1 bis 5 zeigen schematisch eine erste Ausführungsform eines erfindungsgemäßen Kegelsenkers 10.

Der Kegelsenker 10 hat analog der DIN 335:2007-12 einen Einspannschaft 12 und einen in Werkzeugvorschubrichtung entlang der Drehachse 11 an den Einspannschaft 12 anschließenden Schneidkopf 14. Der Einspannschaft 12 und der Schneidkopf 14 sind materialeinstückig und aus HSS-Stahl gefertigt.

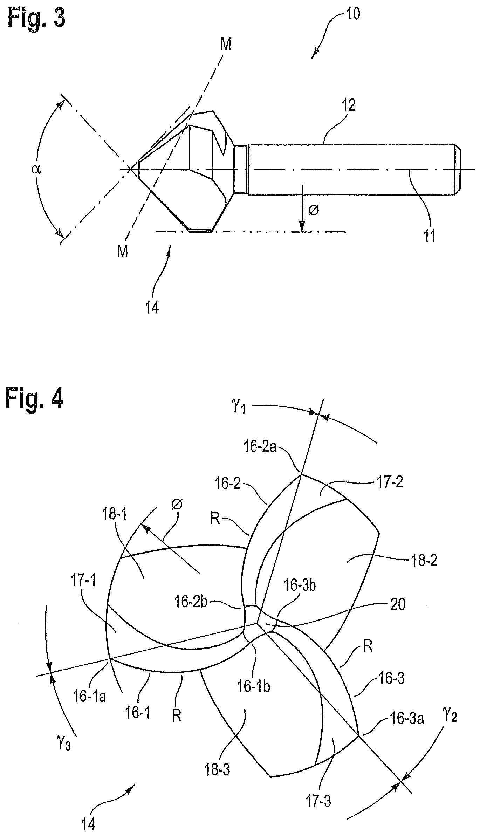

Wie die Figuren zeigen, ist der Kegelsenker 10 rechtsdrehend und dreischneidig ausgeführt. Die drei am Schneidkopf 14 vorgesehenen Hauptschneiden 16-1, 16-2, 16-3 sind mit einer 120°-Teilung in Drehrichtung um die Drehachse 11 herum angeordnet. Die Fig. 4 zeigt die 120°-Teilungswinkel γ1, γ2, γ3 zwischen den Hauptschneiden 16-1 und 16-2, 16-2 und 16-3 bzw. 16-3 und 16-1. Entgegen der Drehrichtung gesehen schließt sich an jede Hauptschneide 16-1, 16-2, 16-3 eine Hauptfreifläche 17-1, 17-2, 17-3 an, auf die eine Spannut 18-1, 18-2, 18-3 folgt. In axialer Richtung gesehen geht jede Hauptschneide 16-1, 16-2, 16-3 an dem außenumfangsseitigen Schneideneck 16-1a, 16-2a, 16-3a in eine in Fig. 1 angegebene außenumfangsseitige Nebenschneide 19-1, 19-2, 19-3 über.

Die drei Hauptschneiden 16-1, 16-2, 16-3 liegen ohne (definierte) Schneidhöhendifferenz auf einer gemeinsamen virtuellen Kegelfläche mit der Drehachse 11 als Kegelachse. Der Öffnungs- oder Kegelwinkel α (vgl. Fig. 3) des Schneidkopfs 14 beträgt in der ersten Ausführungsform 90°.

Wie die Fig. 1 bis 3 zeigen, verläuft jede der drei Hauptschneiden 16-1, 16-2, 16-3 von ihrem innenumfangsseitigen oder mittigen Schneideneck (Anfang) 16-1b, 16-2b, 16-3b zu ihrem außenumfangsseitigen Schneideneck (Ende) 16-1a, 16-2a, 16-3a auf der virtuellen Kegelfläche mit einem Rechtsdrall spiralförmig um die Drehachse 11.

In der ersten Ausführungsform sind die Hauptschneiden 16-1, 16-2, 16-3 gleichförmig ausgebildet. In der axialen Draufsicht oder Stirnansicht der Fig. 4 ist zu erkennen, dass die Hauptschneiden 16-1, 16-2, 16-3 jeweils entlang eines durch drei Punkte, d.h. das mittige Schneideneck 16-1b, 16-2b, 16-3b, das außenumfangsseitige Schneideneck 16-1a, 16-2a, 16-3a und einen (in Fig. 4 nicht eingetragenen) auf halber Schneidenlänge liegenden Mittelpunkt, definierten Bogen verläuft. In der ersten Ausführungsform sind die Bogenradien der drei Hauptschneiden 16-1, 16-2, 16-3 gleich groß. In Fig. 4 sind mit R die Bogenradien für die Hauptschneide 16-1, 16-2, 16-3 angegeben. In Fig. 4 ist der maximale Schneiddurchmesser des Schneidkopfs 14 mit "Ø" angegeben und gemäß der DIN 335:2007-12 von 4,3 mm bis 31 mm betragen kann. Die Bogenradien der Hauptschneiden 16-1, 16-2, 16-3 können in einem Bereich von 0,5 mm bis 150 mm, im Besonderen von 4 mm bis 40 mm, vorzugsweise von 7 mm bis 25 mm. In dem in Fig. 4 gezeigten Beispiel liegt der Durchmesser Ø beispielsweise bei 25 mm und liegen die Bogenradien R der Hauptschneiden 16-1, 16-2, 16-3 beispielsweise bei 11 mm. Des Weiteren weisen die drei Hauptschneiden 16-1, 16-2, 16-3 gleiche Spiral- oder Drallwinkel auf. In Fig. 2 ist der in einer Seitenansicht bei radialer Blickrichtung an einem außenumfangsseitigen Schneideneck gegenüber der Drehachse 11 gemessene Drallwinkel "α" angegeben. Die Drallwinkel der drei Hauptschneiden 16-1, 16-2, 16-3 liegen erfindungsgemäß in einem Bereich von 10° bis 70°, im Besonderen von 15° bis 55°, vorzugsweise von 25° bis 45°. In dem in Fig. 2 gezeigten Beispiel liegt der Drallwinkel α beispielsweise bei 45°.

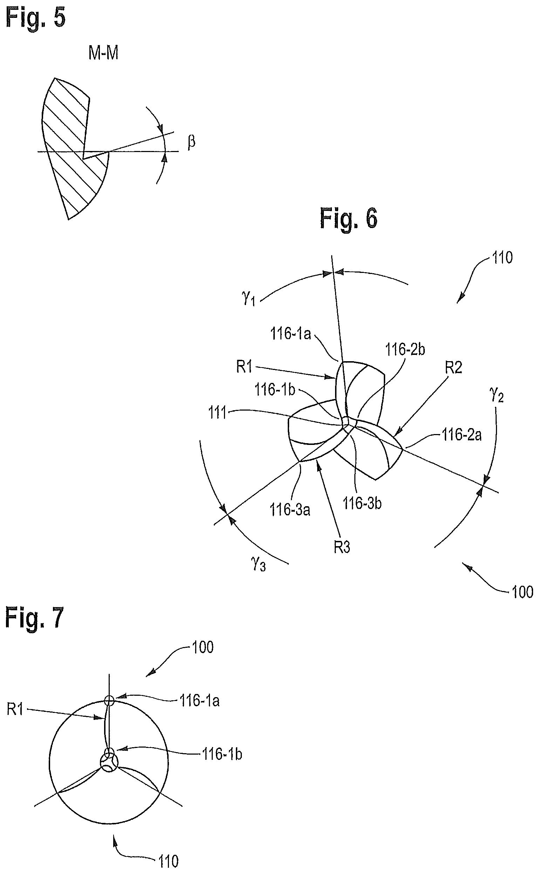

Bei dem erfindungsgemäßen Kegelsenker 10 ändern sich die Spanwinkel der drei Hauptschneiden 16-1, 16-2, 16-3 jeweils von dem mittigen Schneideneck 16-1b, 16-2b, 16-3b zu dem außenumfangsseitigen Schneideneck 16-1a, 16-2a, 16-3a hin gleichmäßig von null oder einem negativen Betrag in der Mitte zu einem positiven Betrag am Außenumfang. In Fig. 5 ist der am außenumfangsseitigen Schneideneck einer Hauptschneide gemessene positive Spanwinkel mit "β" angegeben, der beispielsweise 25° beträgt.

Bezüglich aller übrigen, nicht erwähnten Maßangaben, etc. kann der erfindungsgemäße Kegelsenker 10 den Vorgaben der DIN 335:2007-12 entsprechen.

Die Fig. 1 bis 4 zeigen, dass die mittigen Schneidenecken 16-1b, 16-2b, 16-3b der Hauptschneiden 16-1, 16-2, 16-3 in axialer Richtung auf gleicher Höhe und in einem gleichen radialen Abstand zur Drehachse 11 liegen. Die Fig. 1 bis 4 zeigen eine abgeflachte Spitze 20 auf Höhe der mittigen Schneidenecken 16-1b, 16-2b, 16-3b. Analog dazu liegen die außenumfangsseitigen Schneidenecken 16-1a, 16-2a, 16-3a auf gleicher axialer Höhe und in einem gleichen radialen Abstand zur Drehachse 11.

Aufgrund der Bogenform hat jede Hauptschneide 16-1, 16-2, 16-3 eine größere Schneidenlänge als eine geradlinig verlaufende Hauptschneide eines herkömmlichen Kegelsenkers. Aus der größeren Schneidenlänge resultieren eine höhere Laufruhe und eine höhere Stabilität bei der Senkbearbeitung, weil sich die auf die Hauptschneiden 16-1, 16-2, 16-3 wirkenden Belastungen auf größere Schneideingriffslängen verteilen. In der Summe ergeben sich ein geringerer Verschleiß und eine geringere Ratterneigung.

Durch den Drall in Drehrichtung führen die Hauptschneiden 16-1, 16-2, 16-3 bei der Senkbearbeitung in dem bearbeiteten Werkstück einen ziehenden Schnitt aus und wirken auf das bearbeitete Werkstück schälend ein, woraus eine hohe Laufruhe resultiert.

### Zweite Ausführungsform

Die Fig. 6 und 7 zeigen eine zweite Ausführungsform eines erfindungsgemäßen Kegelsenkers 110. Der Kegelsenker 110 der zweiten Ausführungsform unterscheidet sich von dem Kegelsenker 10 der ersten Ausführungsform im Wesentlichen nur dadurch, dass die Bogenradien R1, R2, R3 der drei Hauptschneiden 116-1, 116-2, 116-3 ungleich sind.

Während bei dem Kegelsenker der ersten Ausführungsform die Hauptschneiden 16-1, 16-2, 16-3 gleichförmig ausgebildet sind, im Besonderen also gleiche Bogenradien und Schneidenlängen aufweisen, haben die Hauptschneiden 116-1, 116-2, 116-3 des Kegelsenkers 110 der zweiten Ausführungsform ungleiche Bogenradien, die in Fig. 6 mit "R1", "R2" bzw. "R3" angegeben sind, wobei R1>R2>R2. In dem in Fig. 6 gezeigten Beispiel liegen die Bogenradien R1, R2, R3 bei 15 mm, 11 mm bzw. 18 mm. Aufgrund der ungleichen Bogenradien haben die Hauptschneiden 116-1, 116-2, 116-3 notwendig auch ungleiche Schneidenlängen.

Wie in der ersten Ausführungsform sind auch bei dem Kegelsenker 110 der zweiten Ausführungsform die drei Hauptschneiden 116-1, 116-2, 116-3 um die Drehachse herum so angeordnet, dass deren außenumfangsseitige Schneidenecken 116-1a, 116-2a, 116-3a mit gleicher Winkelteilung von jeweils 120° um die Drehachse 111 herum angeordnet sind. Diese Anordnung erfordert aufgrund der ungleichen eine ungleiche Winkelteilung der mittigen Schneidenecken 116-1b, 116-2b, 116-3b der Hauptschneiden 116-1, 116-2, 116-3.

Durch die ungleichen Bogenradien und die dadurch erhaltenen ungleichen Schneidenlängen ergeben sich bei der Senkbearbeitung ungleiche Schnittkräfte und ungleiche Beanspruchungen der Hauptschneiden, was sich positiv auf die Ratterneigung des Kegelsenkers auswirkt.

### Dritte Ausführungsform

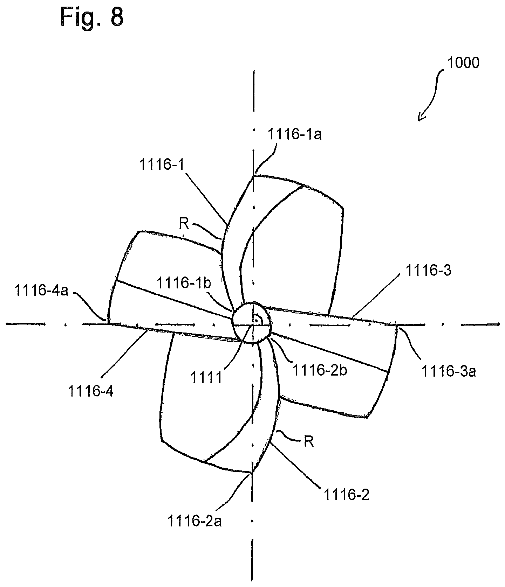

Die Fig. 8 zeigt eine dritte Ausführungsform eines erfindungsgemäßen Kegelsenkers 1000. Der Kegelsenker 1000 der dritten Ausführungsform unterscheidet sich von dem Kegelsenker 10 der ersten Ausführungsform und dem Kegelsenker 110 der zweiten Ausführungsform dadurch, dass er neben den bogenfömig verlaufenden Hauptschneiden 1116-1, 1116-2 auch in herkömmlicher Weise ausgebildete, geradlinig verlaufende Schneiden 1116-3; 1116-4 aufweist.

In Fig. 8 sind zwei bogenförmige Hauptschneiden 1116-1, 1116-2 mit gleichen Bogenradien R und zwei geradlinige Schneiden 1116-3; 1116-4 abwechselnd um die Drehachse 1111 angeordnet. Die außenumfangsseitigen Schneidenecken 1116-1a und 1116-2a der bogenförmigen Hauptschneiden 1116-1 und 1116-2 und die außenumfangsseitigen Schneidenecken 1116-3a und 1116-4a geradlinigen Schneiden sind dabei mit gleicher Winkelteilung von jeweils 90°, d.h. symmetrisch, um die Drehachse 1111 angeordnet.

### Abwandlungen der Ausführungsformen

In der ersten bis dritten Ausführungsform sind der Einspannschaft und der Schneidkopf materialeinstückig aus HSS-Stahl gefertigt. Die Haupt- und Nebenschneiden sind in den Schneidkopf eingeschliffen. Das ist aber nicht zwingend notwendig. Die Haupt- und Nebenschneiden können alternativ dazu an Schneidkörpern, z.B. Schneidplatten oder Schneideinsätzen, ausgebildet sein, die am Schneidkopf als einen Grundkörper dauerhaft fest, z.B. durch Lötung oder Klebung, oder auswechselbar fest, z.B. durch Verschraubung, gehalten sind.

In der ersten bis dritten Ausführungsform ist der Kegelsenker rechtsdrehend ausgeführt. Das ist nicht zwingend notwendig. Der Kegelsenker kann alternativ dazu auch linksdrehend ausgeführt sein.

Des Weiteren kann der Kegelsenker der ersten und zweiten Ausführungsform statt drei Hauptschneiden nur eine Hauptschneide, zwei Hauptschneiden oder mehr als drei Hauptschneiden aufweisen.

Des Weiteren können bei einer mehrschneidigen Ausführung die Hauptschneiden des Kegelsenkers grundsätzlich mit gleicher Teilung, z.B. analog der ersten und dritten Ausführungsform, oder ungleicher Teilung, z.B. analog der zweiten Ausführungsform, am Schneidkopf ausgebildet sein. Des Weiteren können die Hauptschneiden ohne eine definierte Schneidhöhendifferenz, z.B. wie in der ersten bis dritten Ausführungsform, oder aber mit einer definierten Schneidhöhendifferenz von beispielsweise 0,05 mm zwischen zwei in Drehrichtung aufeinanderfolgenden Hauptschneiden angeordnet sein.

Der Öffnungs- oder Kegelwinkel des Schneidkopfs kann abweichend von der ersten und zweiten Ausführungsform auch 60°, 75°, 120° oder einen beliebig anderen Betrag haben.

In der dritten Ausführungsform sind zwei bogenförmige Hauptschneiden und zwei geradlinige Schneiden abwechselnd und mit gleicher Winkelteilung um die Drehachse des Kegelsenkers angeordnet. Es können aber auch nur eine Hauptschneide und eine Schneide, oder jeweils mehr als zwei Hauptschneiden bzw. Schneiden um die Drehachse angeordnet sein. Dabei kann die Winkelteilung der Hauptschneiden bzw. Schneiden um die Drehachse auch asymmetrisch sein. Des Weiteren muss die Zahl der bogenförmigen Hauptschneiden und der geradlinigen Schneiden nicht gleich groß sein und müssen die Bogenradien der bogenförmigen Hauptschneiden nicht gleich groß sein.

## Patentansprüche

1. Kegelsenker (10; 100; 1000), der eine Drehrichtung nach rechts oder eine Drehrichtung nach links, einen Einspannschaft (12) und einen an den Einspannschaft (12) anschließenden Schneidkopf (14) mit wenigstens einer bogenförmig verlaufenden Hauptschneide (16-1, 16-2, 16-3; 116-1, 116-2, 116-3; 1116-1, 1116-2) hat, wobei die wenigstens eine Hauptschneide (16-1, 16-2, 16-3; 116-1, 116-2, 116-3; 1116-1, 1116-2) einen Drall in Drehrichtung hat und in einer axialen Stirnansicht gesehen spiralförmig entlang eines Bogens verläuft, der bei einer Drehrichtung nach rechts im Uhrzeigersinn und bei einer Drehrichtung nach links gegen den Uhrzeigersinn, von einem mittigen Schneideneck (16-1b, 16-2b, 16-3b; 116-1b, 116-2b, 116-3b; 1116-1b, 1116-2b) zu einem außenumfangsseitigen Schneideneck (16-1a, 16-2a, 16-3a; 116-1a, 116-2a, 116-3a; 1116-1a; 1116-2a) läuft, **dadurch gekennzeichnet, dass** der Außendurchmesser (Ø) des Schneidkopfs (14) größer ist als der Außendurchmesser des Einspannschafts (12), und der Schneidkopf (14) zumindest eine außenumfangsseitige Nebenschneide (19-1, 19-2, 19-3) aufweist, wobei die Nebenschneide mit der Hauptschneide durch das aussenumfangsseitige Schneideneck verbunden ist.

2. Kegelsenker (10; 100; 1000) nach einem der vorhergehenden Ansprüche, **dadurch gekennzeichnet, dass** die wenigstens eine Hauptschneide (16-1, 16-2, 16-3; 116-1, 116-2, 116-3; 1116-1, 1116-2), in einer Seitenansicht bei radialer Blickrichtung an dem außenumfangsseitigen Schneideneck gegenüber der Drehachse (11; 111; 1111) gemessen, einen Drallwinkel (α) hat, der in einem Bereich von 10° bis 70°, im Besonderen im Bereich von 15° bis 55°, vorzugsweise von 25° bis 45°, liegt.

3. Kegelsenker (10; 100; 1000) nach einem der vorhergehenden Ansprüche, **dadurch gekennzeichnet, dass**
der Durchmesser (Ø) des Kegelsenkers (10; 100; 1000) im Bereich von 4,3 mm bis 31 mm liegt, und
die wenigstens eine Hauptschneide (16-1, 16-2, 16-3; 116-1, 116-2, 116-3; 1116-1, 1116-2) in einer Stirnansicht gesehen einen Radius (R; R1, R2, R3) im Bereich von 0,5 mm bis 150 mm, im Besonderen im Bereich von 4 mm bis 40 mm, vorzugsweise von 7 mm und 25 mm, hat.

4. Kegelsenker (10; 100) nach einem der vorhergehenden Ansprüche, mit mehreren, im Besonderen drei, spiralförmig verlaufenden Hauptschneiden (16-1, 16-2, 16-3; 116-1, 116-2, 116-3).

5. Kegelsenker (100) nach Anspruch 4, **dadurch gekennzeichnet, dass** die Bogenradien (R1, R2, R3) der Hauptschneiden (116-1, 116-2, 116-3) ungleich sind.

6. Kegelsenker (10; 100) nach Anspruch 4 oder 5, **dadurch gekennzeichnet, dass** die außenumfangsseitigen Schneidenecken (16-1a, 16-2a, 16-3a; 116-1a, 116-2a, 116-3a) der Hauptschneiden (16-1, 16-2, 16-3; 116-1, 116-2, 116-3) mit gleicher Winkelteilung (γ1,γ2, γ3) um die Drehachse (11) angeordnet sind.

7. Kegelsenker (10; 100) nach einem der Ansprüche 4 bis 8, **dadurch gekennzeichnet, dass** die Hauptschneiden (16-1, 16-2, 16-3; 116-1, 116-2, 116-3) gleiche oder definiert ungleiche Schneidhöhen aufweisen.

8. Kegelsenker (10; 100; 1000) nach einem der vorhergehenden Ansprüche, **dadurch gekennzeichnet, dass** er materialeinstückig aus HSS-Stahl gefertigt ist.

9. Kegelsenker (10; 100; 1000) nach einem der vorhergehenden Ansprüche, **gekennzeichnet durch** wenigstens eine geradlinig verlaufende Schneide (1116-3; 1116-4).

10. Kegelsenker (1000) nach Anspruch 9, **gekennzeichnet durch** eine gleich große Zahl spiralförmig verlaufender Hauptschneiden (1116-1, 1116-2) und geradlinig verlaufender Schneiden (1116-3; 1116-4).

11. Kegelsenker (1000) nach Anspruch 10, **dadurch gekennzeichnet, dass** die wenigstens eine spiralförmig verlaufende Hauptschneide (1116-1, 1116-2) und die wenigstens eine geradlinig verlaufende Schneide (1116-3; 1116-4) abwechselnd um die Drehachse (1111) angeordnet sind.

## Claims

1. Countersink (10; 100; 1000) having a right-hand or left-hand direction of rotation, a shank (12), and a cutting head (14) connected to the shank (12) and having at least one arcuate main cutting edge (16-1, 16-2, 16-3; 116-1, 116-2, 116-3; 1116-1, 1116-2), wherein the at least one main cutting edge (16-1, 16-2, 16-3; 116-1, 116-2, 116-3; 1116-1, 1116-2) has a helix in the direction of rotation and, as viewed in an axial end view, extends spirally along an arc which, in the case of right-hand rotation, runs clockwise and, in the case of left-hand rotation, runs counterclockwise from a central cutting corner (16-1b, 16-2b, 16-3b; 116-1b, 116-2b, 116-3b; 1116-1b, 1116-2b) to an outer circumferential cutting corner (16-1a, 16-2a, 16-3a; 116-1a, 116-2a, 116-3a; 1116-1a, 1116-2a), **characterized in that** the outer diameter (Ø) of the cutting head (14) is greater than the outer diameter of the shank (12), and the cutting head (14) has at least one outer circumferential secondary cutting edge (19-1, 19-2, 19-3) on its outer circumference, wherein the secondary cutting edge is connected to the main cutting edge by the outer circumferential cutting corner.

2. Countersink (10; 100; 1000) according to one of the preceding claims, **characterized in that** the at least one main cutting edge (16-1, 16-2, 16-3; 116-1, 116-2, 116-3; 1116-1, 1116-2), when viewed from the side in a radial direction, has a helix angle (α) measured at the outer circumferential cutting corner relative to the axis of rotation (11; 111; 1111), has a helix angle (α) that lies in a range from 10° to 70°, specifically in the range from 15° to 55°, and preferably from 25° to 45°.

3. Countersink (10; 100; 1000) according to any one of the preceding claims, **characterized in that**
the diameter (Ø) of the countersink (10; 100; 1000) is in the range of 4.3 mm to 31 mm, and
the at least one main cutting edge (16-1, 16-2, 16-3; 116-1, 116-2, 116-3; 1116-1, 1116-2) has, as viewed in a front view, a radius (R; R1, R2, R3) in the range of 0.5 mm to 150 mm, specifically in the range of 4 mm to 40 mm, and preferably between 7 mm and 25 mm.

4. Countersink (10; 100) according to any one of the preceding claims, comprising a plurality, in particular three, of helically arranged main cutting edges (16-1, 16-2, 16-3; 116-1, 116-2, 116-3).

5. Countersink (100) according to claim 4, **characterized in that** the arc radii (R1, R2, R3) of the main cutting edges (116-1, 116-2, 116-3) are unequal.

6. Countersink (10; 100) according to claim 4 or 5, **characterized in that** the outer circumferential cutting corners (16-1a, 16-2a, 16-3a; 116-1a, 116-2a, 116-3a) of the main cutting edges (16-1, 16-2, 16-3; 116-1, 116-2, 116-3) are arranged at equal angular intervals (γ1, γ2, γ3) around the axis of rotation (11).

7. Countersink (10; 100) according to any one of claims 4 through 8, **characterized in that** the main cutting edges (16-1, 16-2, 16-3; 116-1, 116-2, 116-3) have equal or defined unequal cutting heights.

8. Countersink (10; 100; 1000) according to any one of the preceding claims, **characterized in that** it is manufactured from a single piece of HSS steel.

9. Countersink (10; 100; 1000) according to any one of the preceding claims, **characterized by** at least one straight cutting edge (1116-3; 1116-4).

10. Countersink (1000) according to claim 9, **characterized by** an equal number of helical main cutting edges (1116-1, 1116-2) and straight cutting edges (1116-3; 1116-4).

11. Countersink (1000) according to claim 10, **characterized in that** the at least one helical main cutting edge (1116-1, 1116-2) and the at least one straight cutting edge (1116-3; 1116-4) are arranged alternately around the axis of rotation (1111).

## Revendications

1. Fraise conique (10 ; 100 ; 1000), qui présente un sens de rotation vers la droite ou vers la gauche, une tige de serrage (12) et une tête de coupe (14) se raccordant à la tige de serrage (12) et avec au moins un tranchant principal (16-1, 16-2, 16-3 ; 116-1, 116-2, 116-3 ; 1116-1, 1116-2), dans laquelle l'au moins un tranchant principal (16-1, 16-2, 16-3 ; 116-1, 116-2, 116-3 ; 1116-1, 1116-2) présente un tourbillon dans le sens de rotation et
vue de face axialement, s'étend en spirale le long d'un arc qui, en cas de sens de rotation vers la droite dans le sens horaire et de sens de rotation vers la gauche dans le sens antihoraire, va d'un coin de tranchant central (16-1b, 16-2b, 16-3b ; 116-1b, 116-2b, 116-3b ; 1116-1b, 1116-2b) vers un coin de tranchant côté périphérie extérieure (16-1a, 16-2a, 16-3a ; 116-1a, 116-2a, 116-3a ; 1116-1a ; 1116-2a), **caractérisée en ce que** le diamètre extérieur (Ø) de la tête de coupe (14) est supérieur au diamètre extérieur de la tige de serrage (12), et la tête de coupe (14) présente au moins un tranchant secondaire (19-1, 19-2, 19-3) côté périphérie extérieure, dans laquelle le tranchant secondaire est connecté au tranchant principal par l'intermédiaire du coin de tranchant côté périphérie extérieure.

2. Fraise conique (10 ; 100 ; 1000) selon l'une quelconque des revendications précédentes, **caractérisée en ce que** l'au moins un tranchant principal (16-1, 16-2, 16-3 ; 116-1, 116-2, 116-3 ; 1116-1, 1116-2), mesuré dans une vue latérale avec une direction d'observation radiale au niveau du coin de tranchant côté périphérie extérieure par rapport à l'axe de rotation (11 ; 111 ; 1111), présente un angle de torsion (α) qui se situe dans une plage de 10° à 70°, en particulier dans une plage de 15° à 55°, de préférence de 25° à 45°.

3. Fraise conique (10 ; 100 ; 1000) selon l'une quelconque des revendications précédentes, **caractérisée en ce que**
le diamètre (Ø) de la fraise conique (10 ; 100 ; 1000) se situe dans une plage de 4,3 mm à 31 mm, et
l'au moins un tranchant principal (16-1, 16-2, 16-3 ; 116-1, 116-2, 116-3 ; 1116-1, 1116-2) présente dans une vue de face un rayon (R ; R1, R2, R3) dans la plage de 0,5 mm à 150 mm, en particulier dans la plage de 4 mm à 40 mm, de préférence de 7 mm et 25 mm.

4. Fraise conique (10 ; 100) selon l'une quelconque des revendications précédentes, avec plusieurs, en particulier trois, tranchants principaux (16-1, 16-2, 16-3 ; 116-1, 116-2, 116-3) s'étendant en spirale.

5. Fraise conique (100) selon la revendication 4, **caractérisée en ce que** les rayons de courbure (R1, R2, R3) des tranchants principaux (116-1, 116-2, 116-3) sont inégaux.

6. Fraise conique (10 ; 100) selon la revendication 4 ou 5, **caractérisée en ce que** les coins de tranchant situés côté périphérie extérieure (16-1a, 16-2a, 16-3a ; 116-1a, 116-2a, 116-3a) des tranchants principaux (16-1, 16-2, 16-3 ; 116-1, 116-2, 116-3) sont disposés avec un pas angulaire identique (γ1, γ2, γ3) autour de l'axe de rotation (11).

7. Fraise conique (10 ; 100) selon l'une quelconque des revendications 4 à 8, **caractérisée en ce que** les tranchants principaux (16-1, 16-2, 16-3 ; 116-1, 116-2, 116-3) présentent des hauteurs de coupe identiques ou définies à une valeur différente.

8. Fraise conique (10 ; 100 ; 1000) selon l'une quelconque des revendications précédentes, **caractérisée en ce qu'**elle est constituée par morceaux de matériau en acier HSS.

9. Fraise conique (10 ; 100 ; 1000) selon l'une quelconque des revendications précédentes, **caractérisée par** au moins un tranchant s'étendant de manière rectiligne (1116-3 ; 1116-4).

10. Fraise conique (1000) selon la revendication 9, **caractérisée par** un nombre égal de tranchants principaux s'étendant en spirale (1116-1, 1116-2) et de tranchants s'étendant de manière rectiligne (1116-3 ; 1116-4).

11. Fraise conique (1000) selon la revendication 10, **caractérisée en ce que** l'au moins un tranchant principal s'étendant en spirale (1116-1, 1116-2) et l'au moins un tranchant s'étendant de manière rectiligne (1116-3 ; 1116-4) sont disposés en alternance autour de l'axe de rotation (1111).
